# EUROPEAN PATENT SPECIFICATION

(11) **EP 3 028 852 B1**
(45) Date of publication and mention of the grant of the patent: **25.09.2019**
(21) Application number: 14831608.6
(22) Date of filing: 18.07.2014
(51) Int. Cl.: B32B 27/04, B32B 27/08, B32B 17/02, B32B 27/12, B32B 5/02

(54) **CONTINUOUS FIBER REINFORCED RESIN COMPOSITE MATERIAL AND MOLDED ARTICLE THEREOF**
KONTINUIERLICHES FASERVERSTÄRKTES HARZVERBUNDMATERIAL UND DARAUS GEFORMTER GEGENSTAND
MATÉRIAU COMPOSITE EN RÉSINE RENFORCÉE PAR DES FIBRES CONTINUES ET ARTICLE MOULÉ ASSOCIÉ

(30) Priority: 30.07.2013 KR 20130090188; 29.04.2014 KR 20140051373
(43) Date of publication of application: 08.06.2016
(73) Proprietor: LG Hausys, Ltd., Seoul 150-721 (KR)
(72) Inventor: LEE, Tae Hwa, Gwangmyeong-si Gyeonggi-do 423-750 (KR); KIM, Hee June, Seongnam-si Gyeonggi-do 463-730 (KR)
(74) Representative: Gill Jennings & Every LLP
(86) International application number: PCT/KR2014/006563
(87) International publication number: WO 2015/016518

(56) References cited:
- EP-A2- 0 444 867
- WO-A1-2012/059652
- JP-A- H07 214 714
- JP-A- 2011 006 578
- JP-B1- 5 236 840
- KR-A- 20020 053 759
- KR-A- 20120 078 345
- DATABASE WPI Week 201106 Thomson Scientific, London, GB; AN 2011-A58523 XP002755515, & JP 2011 006578 A (MITSUBISHI PLASTICS IND LTD) 13 January 2011 (2011-01-13)
- DATABASE WPI Week 200522 Thomson Scientific, London, GB; AN 2005-205278 XP002755632, & JP 2005 052987 A (DU PONT TORAY CO LTD) 3 March 2005 (2005-03-03)

## Description

### [Technical Field]

The present invention relates to a continuous fiber-reinforced resin composite material, and a molded article thereof.

### [Background Art]

Since a continuous fiber-reinforced resin composite material manufactured by impregnating continuous fibers into a matrix resin is capable of utilizing excellent mechanical properties of fibers according to arrangement of the fibers, the demand has been continuously increased in vehicles, aircrafts, building materials, and wind power fields.

There are many methods for impregnating the continuous fibers into the matrix resin. Among them, the most commonly used method is a pultrusion method including melting the resin at a high temperature while pulling the fibers, and impregnating the fibers in a mold.

Further, there is a combing glue method including mixing a fiber consisting of the resin to be a matrix with the continuous fiber to be used as a reinforcing agent, and impregnating the mixed fiber using heat and pressure. The composite manufactured by the combing glue method may be woven, but there are problems in that the manufactured fiber is cut or blown into the air.

JP2011006578 A discloses a fiber and resin composite sheet for producing molded articles.

### [Disclosure]

### [Technical Problem]

It is an aspect of the present invention to provide a continuous fiber-reinforced resin composite material capable of being woven and wound.

It is another aspect of the present invention to provide a molded article woven and wound by using the continuous fiber-reinforced resin composite material.

### [Technical Solution]

In accordance with one aspect of the present invention, there is provided a continuous fiber-reinforced resin composite material which is a laminate in which a continuous fiber layer and a resin layer are alternately laminated, wherein the resin layer is a layer formed by including a thermoplastic resin or a thermosetting resin, and the continuous fiber layer includes a structural frame of continuous fibers formed by arranging continuous fibers side by side, wherein the thermoplastic resin or the thermosetting resin, originating from the resin layer, penetrates into the structural frame of continuous fibers up to a predetermined depth from a surface of the continuous fiber to form a resin-impregnated continuous fiber, such that a part of the structural frame of continuous fibers is the resin-impregnated continuous fiber and the remainder of the structural frame of continuous fibers is a resin-non-impregnated continuous fiber into which the thermoplastic resin or the thermosetting resin is not penetrated, wherein a bulk volume ratio of the resin-impregnated continuous fiber to the resin-non-impregnated continuous fiber is 4:6 to 7:3.

The continuous fiber-reinforced resin composite material may include at least two of the plurality of the continuous fiber layers or the resin layers.

The continuous fiber layer may have a thickness of about 20 µm to about 65 µm.

The continuous fiber may have an average diameter of about 5 µm to about 20 µm.

The structural frame of continuous fibers may be formed in two (2) to twenty (20) plys, of which one ply is formed of individual continuous fibers being arranged side by side.

The resin layer may have a thickness of about 10 µm to about 200 µm.

The resin originating from the resin layer may penetrate into the structural frame of continuous fibers toward the center from a surface of the continuous fiber layer, so that the resin-impregnated continuous fiber is present in up to a depth of 5% to 35% on the basis of total thickness of the continuous resin layer.

The structural frame of continuous fibers may be formed by stacking the continuous fibers, and a packing shape in which the continuous fibers are stacked may be a triangle packing or a square packing when being viewed on a cross section of the continuous fiber layer on the basis of a circular cross section of the continuous fiber.

The continuous fiber may be one selected from the group consisting of carbon fibers, glass fibers, aramid fibers, and combinations thereof.

The resin may include one selected from the group consisting of polytetrafluoroethylene (PTFE), polyethylene, polypropylene (PP), polystyrene, polyphenylene oxide (PPO), polyvinyl chloride (PVC), polyethylene terephthalate (PET), Nylon 6.6, polymethyl methacrylate (PMMA), and combinations thereof.

The resin penetrating into the continuous fiber layer may originate from the resin layer, so that the resin layers may be integrated with the continuous resin layers.

In accordance with another aspect of the present invention, there is provided a molded article including the continuous fiber-reinforced resin composite material as described above.

The molded article may be formed by winding the continuous fiber-reinforced resin composite material.

### [Advantageous Effects]

The continuous fiber-reinforced resin composite material has flexibility appropriate for being applied to weaving and winding processes, and excellent mechanical properties.

### [Description of Drawings]

Fig. 1 is a cross-sectional view illustrating a continuous fiber-reinforced resin composite material according to an exemplary embodiment of the present invention.
FIG. 2 is a cross-sectional view illustrating a portion of a continuous fiber-reinforced resin composite material according to another exemplary embodiment of the present invention.

### [Best Mode]

Hereinafter, exemplary embodiments of the present invention will be described in detail with reference to the accompanying drawings so that those skilled in the art may easily practice the present invention. The present invention may be implemented in various different ways and is not limited to the exemplary embodiments provided in the present description.

The description of parts deviating from the subject matter of the present invention will be omitted. Like reference numerals designate like elements throughout the specification.

In the drawings, thicknesses of various layers and regions are exaggerated for clarity. In the drawings, thicknesses of partial layers and regions are exaggerated for convenience of explanation.

Hereinafter, formation of any configuration in "an upper part (or a lower part) or "on (or below)" of a substrate means that any configuration is formed while contacting an upper surface (or a lower surface) of the substrate, and is not limited to exclude other constitution between the substrate and any configuration formed on (or below) the substrate.

In an exemplary embodiment of the present invention, the present invention provides a continuous fiber-reinforced resin composite material which is a laminate in which a continuous fiber layer and a resin layer are alternately laminated, wherein the resin layer is a layer formed by including a thermoplastic resin or a thermosetting resin, and the continuous fiber layer includes a structural frame of continuous fibers formed by arranging continuous fibers side by side. The thermoplastic resin or the thermosetting resin, originating from the resin layer penetrates into the structural frame of continuous fibers a predetermined depth from a surface of the continuous fiber to form a resin-impregnated continuous fiber, such that a part of the structural frame of continuous fibers is the resin-impregnated continuous fiber and the remainder of the structural frame of continuous fibers is a resin-non-impregnated continuous fiber into which the thermoplastic resin or the thermosetting resin is not penetrated, wherein a bulk volume ratio of the resin-impregnated continuous fiber to the resin-non-impregnated continuous fiber is 4:6 to 7:3.

The continuous fiber-reinforced resin composite material may include at least two layers of the continuous fiber layers or the resin layers, specifically, two (2) layers to eight (8) layers.

The continuous fiber-reinforced resin composite material has a structure capable of controlling impregnation property of the continuous fiber by a simple process and a low cost, thereby being applicable to various usages as a material having appropriate impregnation property to provide excellent flexibility while simultaneously having excellent mechanical properties.

The continuous fiber-reinforced resin composite material may be applied to a winding process with excellently implemented flexibility and mechanical strength, and may be wound to be manufactured into an article.

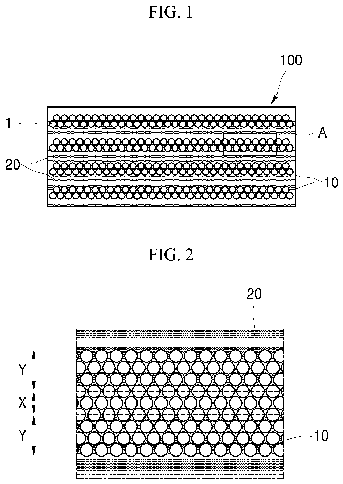

FIG. 1 is a cross-sectional view illustrating the continuous fiber-reinforced resin composite material 100.

The continuous fiber layer 10 may include the structural frame of continuous fibers formed by arranging individual continuous fibers 1 side by side in a length direction of the fiber to be stacked. The thermoplastic resin or the thermosetting resin may penetrate into the structural frame of continuous fibers to form the continuous fiber layer 10.

The expression in which the resin penetrates into or is impregnated into the structural frame of continuous fibers means that the resin penetrates into interspaces among the continuous fibers in the structural frame of continuous fibers and spaces inside the continuous fibers (FIG. 2 is a schematic diagram, wherein a case in which the resin penetrates into the spaces inside the continuous fibers, is not illustrated).

For example, the continuous fiber-reinforced resin composite material 100 may be formed by alternately stacking sheets formed of the structural frame of continuous fibers and resin sheets, followed by melt-pressing, wherein the thermoplastic resin or the thermosetting resin of the resin sheet penetrates and impregnated into the structural frame of continuous fibers to form the continuous fiber layer 10. As a result, the continuous fiber-reinforced resin composite material 100 in which the continuous fiber layers 10 and the resin layers 20 are alternately stacked may be formed.

In order to impregnate the resin into the continuous fibers of the continuous fiber layers at the time of manufacturing the continuous fiber-reinforced resin composite material, a tape, a film, and the thermoplastic resin in a sheet type as described above may be used, and as another example, a method for passing the fiber through a bath typed container filled with resin may be used.

The melt-pressing may be performed without limitation by processes known in the art. Specifically, a heat source used to impregnate the resin into the continuous fiber, a double belt may be used. For example, the melt-pressing may be performed by a hot-rolling process which is a calendaring process.

Further, the degree in which the resin is impregnated may be controlled depending on process conditions such as temperature, pressure, and the like, during the melt-pressing.

The impregnation property may be various depending on parts of the continuous fiber-reinforced resin composite material by controlling temperature and sections of the parts to be heated.

As described above, the resin penetrating into the continuous resin layer 10 originates from the resin sheet forming the resin layer, and the continuous fiber layers 10 and the resin layers 20 are integrated with each other to form the continuous fiber-reinforced resin composite material 100.

The structural frame of continuous fibers 10 is formed in two (2) to twenty (20) plys, of which one ply is formed of individual continuous fibers 1 being arranged side by side.

A shape in which the continuous fibers 1 are stacked for forming the structural frame of continuous fibers, that is, a packing shape may be various such as a triangle packing, a square packing, and the like, when being viewed on a cross section of the continuous fiber layer 10 on the basis of a circular cross section of the continuous fiber 1, but the packing shape is not limited thereto, but an appropriate packing shape may be selected to achieve desired physical properties.

Specifically, for example, the structural frame of continuous fibers may be formed by spreading a bundle of continuous fibers to have a desired thickness. The structural frame of continuous fibers may be variously manufactured by methods known in the art without limitation.

For example, the continuous fiber thickness 10 may have a thickness of about 20 µm to about 65 µm. The continuous fiber layer 10 having a thickness in the above range is appropriate for implementing impregnation property, so that the continuous fiber-reinforced resin composite material 100 has appropriate flexibility and has mechanical strength.

The thickness of the continuous fiber layers 10 may be affected by how many layers of the continuous fibers are stacked, and also may be affected by size of the continuous fiber 1.

For example, the continuous fiber 1 may have an average diameter of about 5 µm to about 20 µm. The continuous fiber layer 10 formed by the continuous fibers 1 having a size in the above range is appropriate for implementing impregnation property, so that the continuous fiber-reinforced resin composite material 100 has appropriate flexibility and has mechanical strength.

The continuous fiber 1 may include at least one selected from the group consisting of carbon fibers, glass fibers, aramid fibers, and combinations thereof.

As the resin, any resin known to be used in the continuous fiber-reinforced resin composite may be used without limitation. The resin may be a thermoplastic resin or a thermosetting resin depending on desirable usages, specifically, may include one selected from the group consisting of polytetrafluoroethylene (PTFE), polyethylene, polypropylene (PP), polystyrene, polyphenylene oxide (PPO), polyvinyl chloride (PVC), polyethylene terephthalate (PET), Nylon 6.6, polymethyl methacrylate (PMMA), and combinations thereof, but the present invention is not limited thereto.

The resin layer may have a thickness of about 10 µm to about 200 µm. The resin layer 20 having a thickness in the above range is appropriate for implementing impregnation property, so that the continuous fiber-reinforced resin composite material 100 has appropriate flexibility and has mechanical strength.

The resin originating from the resin layer 20 may penetrate into the structural frame of continuous fibers up to a predetermined depth from a surface of the continuous fiber layer 10, wherein the degree of penetration may be regulated to control the impregnation property.

FIG. 2 is an enlarged view of a ractangular part A illustrated in FIG. 1, wherein the resin penetrates up to a thickness represented by Y, thereby forming the resin-impregnated continuous fiber, and the resin does not penetrate to the center represented by X, thereby forming the resin-non-impregnated continuous fiber (In FIG. 1 and FIG. 2, both of the resin-impregnated continuous fiber and the resin-non-impregnated continuous fiber are represented by 1 without differentiation).

The continuous fiber-reinforced resin composite material 100 into which the resin is impregnated in the above range may be applied to a winding process with appropriate mechanical strength.

The amount of resin capable of being impregnated within the same volume may be changed depending on kinds and positions of the continuous fiber.

A bulk volume ratio of the resin-impregnated continuous fiber to the resin-non-impregnated continuous fiber in the continuous fiber layer 10 is 4:6 to 7:3. The continuous fiber-reinforced resin composite material 100 into which the resin is impregnated in the above range may be applied to a winding process with appropriate mechanical strength. The bulk ratio refers to a volume ratio calculated by including interspaces of the continuous fibers.

As described above, the continuous fiber-reinforced resin composite material 100 may be wound by the winding process while maintaining continuity of the continuous fiber 1.

For example, the continuous fiber-reinforced resin composite material 100 may be wound around a specific central material while maintaining continuity of the continuous fiber 1.

The continuous fiber-reinforced resin composite material 100 may be formed in a sheet shape, or may be formed in an extended shape in a length direction while having a width, a thickness, and a length. When the continuous fiber-reinforced resin composite material 100 has the extended shape, the continuous fiber-reinforced resin composite material 100 having the extended shape in the length direction may be woven as a weft or a warp. In order to be woven, the weft or the warp needs to have flexibility. In particular, when the weft is supplied as a material without flexibility, the weft moves with large radius as raffia is moved with the weft, thereby being bumped into the warp. The continuous fiber-reinforced resin composite material 100 may have appropriate flexibility required as the weft or the warp, thereby being woven.

In addition, the continuous fiber-reinforced resin composite material 100 may be woven. In order to be woven, the weft or the warp needs to have flexibility. In particular, when the weft is supplied as a material without flexibility, the weft moves with large radius as raffia is moved with the weft, thereby being bumped into the warp. The continuous fiber-reinforced resin composite material 100 may have appropriate flexibility required as the weft or the warp, thereby being woven.

In another embodiment of the present invention, the present invention provides a molded article including the continuous fiber-reinforced resin composite material as described above.

As described above, the continuous fiber-reinforced resin composite material is capable of being used for the winding process, which is appropriately applicable to articles requiring the winding process.

Accordingly, the molded article may include the wound continuous fiber-reinforced resin composite material.

For example, the article may be an article manufactured by using a filament winding process that is a process using winding.

As another example, the article may be an article formed by weaving the continuous fiber-reinforced resin composite material as the weft or the warp, as described above.

Hereinafter, Examples and Comparative Examples of the present invention will be described. However, the following examples are only provided as one embodiment of the present invention, and the present invention is not limited to the following Examples.

### (Example)

### Example 1 (not representative of the invention)

A continuous fiber-reinforced resin composite material was manufactured by spreading a bundle of 4000 strands of continuous glass fibers each having a diameter of 17 µm to form 4 sheets of a structural frame of continuous fibers having a thickness of 50 µm, then alternately stacking the structural frames of continuous fibers and polypropylene resin layers having a thickness of 50µm, and pressing the layers at 220°C under a pressure of 10 MPa for 1 minute. The manufactured continuous fiber-reinforced resin composite material was observed by SEM. As a result, on the basis of the thickness (50 µm) of one continuous fiber layer, a resin-non-impregnated continuous fiber region having a thickness of 40 µm was formed in the center, and resin-impregnated continuous fiber regions each having a thickness of 5 µm (total thickness of 10 µm corresponding to Y+Y in FIG. 2) were formed in upper and lower parts of the resin-non-impregnated continuous fiber region.

### Example 2

A continuous fiber-reinforced resin composite material was manufactured by spreading a bundle of 24000 strands of continuous glass fibers each having a diameter of 7 µm to form 4 sheets of a structural frame of continuous fibers having a thickness of 50 µm, then alternately stacking the structural frames of continuous fibers and polyamide resin layers having a thickness of 50µm, and pressing the layers at 270°C under a pressure of 10 MPa for 3 minutes. The manufactured continuous fiber-reinforced resin composite material was observed by SEM. As a result, on the basis of the thickness (50 µm) of one continuous fiber layer, a resin-non-impregnated continuous fiber region having a thickness of 15 µm was formed in the center, and resin-impregnated continuous fiber regions each having a thickness of 17.5 µm (total thickness of 35 µm corresponding to Y+Y in FIG. 2) were formed in upper and lower parts of the resin-non-impregnated continuous fiber region.

### Example 3

A continuous fiber-reinforced resin composite material was manufactured by spreading a bundle of 24000 strands of continuous glass fibers each having a diameter of 7 µm to form 4 sheets of a structural frame of continuous fibers having a thickness of 50 µm, then alternately stacking the structural frames of continuous fibers and polyamide resin layers having a thickness of 50µm, and pressing the layers at 270°C under a pressure of 10 MPa for 2 minutes. The manufactured continuous fiber-reinforced resin composite material was observed by SEM. As a result, on the basis of the thickness (50 µm) of one continuous fiber layer, a resin-non-impregnated continuous fiber region having a thickness of 30 µm was formed in the center, and resin-impregnated continuous fiber regions each having a thickness of 10 µm (total thickness of 20 µm corresponding to Y+Y in FIG. 2) were formed in upper and lower parts of the resin-non-impregnated continuous fiber region.

### Example 4 (not representative of the invention)

A continuous fiber-reinforced resin composite material was manufactured by spreading a bundle of 4000 strands of continuous glass fibers each having a diameter of 17 µm to form 4 sheets of a structural frame of continuous fibers having a thickness of 50 µm, then alternately stacking the structural frames of continuous fibers and polypropylene resin layers having a thickness of 50µm, and pressing the layers at 220°C under a pressure of 10 MPa for 10 minutes. The manufactured continuous fiber-reinforced resin composite material was observed by SEM. As a result, on the basis of the thickness (50 µm) of one continuous fiber layer, a resin-non-impregnated continuous fiber region having a thickness of 2 µm was formed in the center, and resin-impregnated continuous fiber regions each having a thickness of 24 µm (total thickness of 48 µm corresponding to Y+Y in FIG. 2) were formed in upper and lower parts of the resin-non-impregnated continuous fiber region.

### Comparative Example 1

A continuous fiber-reinforced resin composite material was manufactured by spreading a bundle of 4000 strands of continuous glass fibers each having a diameter of 17 µm to form 4 sheets of a structural frame of continuous fibers having a thickness of 50 µm, then alternately stacking the structural frames of continuous fibers and polypropylene resin layers having a thickness of 50µm, and pressing the layers at 220°C under a pressure of 10 MPa for 15 minutes. The manufactured continuous fiber-reinforced resin composite material was observed by SEM. As a result, one continuous fiber layer was formed as the resin-impregnated continuous fiber.

### Evaluation

### Experimental Example 1

The continuous fiber-reinforced resin composite materials of Examples 1 to 4 and Comparative Example 1 were cut into a size 5mm (width) ^{∗} 100mm (length), and bent with a force of 1kgf by 180 degrees. Then, flexibility was evaluated by height difference between upper and lower surfaces thereof.

The continuous fiber-reinforced resin composite materials of Examples 1 to 3 had the height difference of less than 5 mm, thereby being capable of being woven, and the continuous fiber-reinforced resin composite material of Example 4 had the height difference of 15 mm as compared to those of Examples 1 to 3, and had crack occurred therein. Accordingly, it was confirmed that in view of a flexibility aspect, Examples 1 to 3 had a more advantageous impregnation ratio as compared to Example 4.

In the continuous fiber-reinforced resin composite material of Comparative Example 1, crack the most severely occurred, and the height difference was 18 mm. Accordingly, the continuous fiber-reinforced resin composite material of Comparative Example 1 was not appropriate for weaving.

It could be confirmed from the evaluation results that as the impregnation ratio becomes high, flexibility appropriate for weaving tends to be low.

### Experimental Example 2

Flexural strength test was performed by stacking 8 sheets of the continuous fiber-reinforced resin composite materials of Examples 1 to 4 and Comparative Example 1, respectively, and compression-molding the continuous fiber-reinforced resin composite materials of Examples 1 and 4, and Comparative Example 1 at 220°C under 10 MPa, and compression-molding the continuous fiber-reinforced resin composite materials of Examples 2 and 3 at 270°C under 10 MPa, for 10 minutes.

Flexural strength physical property of the molded articles manufactured from the continuous fiber-reinforced resin composite materials of Examples 1 to 4 and Comparative Example 1 was measured on the basis of ASTM D790, and the results thereof were shown in Table 1 below.

**[Table 1]**

| Classification | Flexural Strength (MPa) |
|---|---|
| Example 1 | 450MPa |
| Example 2 | 1000MPa |
| Example 3 | 950MPa |
| Example 4 | 450MPa |
| Comparative Example 1 | 450MPa |

It could be confirmed from the results of Table 1 that the molded articles of Examples 2 and 3 (representative of the invention) had significantly improved flexural strength, and the molded articles of Examples 1 and 4 had similar strength to that of the molded article of Comparative Example 1.

In particular, it could be appreciated from the results of Experimental Examples 1 and 2 that when the impregnation ratio was satisfied like Examples 2 and 3, significantly excellent strength was implemented while securing flexibility in which the material is capable of being woven.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A continuous fiber-reinforced resin composite material which is a laminate in which a continuous fiber layer and a resin layer are alternately laminated,
wherein the resin layer is a layer formed by including a thermoplastic resin or a thermosetting resin, and
the continuous fiber layer includes a structural frame of continuous fibers formed by arranging continuous fibers side by side,
wherein the thermoplastic resin or the thermosetting resin, originating from the resin layer, penetrates into the structural frame of continuous fibers up to a predetermined depth from a surface of the continuous fiber to form a resin-impregnated continuous fiber, such that a part of the structural frame of continuous fibers is the resin-impregnated continuous fiber and the remainder of the structural frame of continuous fibers is a resin-non-impregnated continuous fiber into which the thermoplastic resin or the thermosetting resin is not penetrated, wherein a bulk volume ratio of the resin-impregnated continous fiber to the resin-non-impregnated continous fiber is 4:6 to 7:3.

2. The continuous fiber-reinforced resin composite material of claim 1, wherein the continuous fiber-reinforced resin composite material includes at least two of the plurality of the continuous fiber layers or the resin layers.

3. The continuous fiber-reinforced resin composite material of claim 1, wherein the continuous fiber layer has a thickness of 20 µm to 65 µm.

4. The continuous fiber-reinforced resin composite material of claim 1, wherein the continuous fiber has an average diameter of 5 µm to 20 µm.

5. The continuous fiber-reinforced resin composite material of claim 1, wherein the structural frame of continuous fibers is formed in two (2) to twenty (20) plys, of which one ply is formed of individual continuous fibers being arranged side by side.

6. The continuous fiber-reinforced resin composite material of claim 1, wherein the resin layer has a thickness of 10 µm to 200 µm.

7. The continuous fiber-reinforced resin composite material of claim 1, wherein the resin originating from the resin layer penetrates into the structural frame of continuous fibers toward the center from a surface of the continuous fiber layer, so as that the resin-impregnated continuous fiber is present in up to a depth of 5% to 35% on the basis of total thickness of the continuous resin layer.

8. The continuous fiber-reinforced resin composite material of claim 1, wherein the structural frame of continuous fibers is formed by stacking the continuous fibers, and a packing shape in which the continuous fibers are stacked is a triangle packing or a square packing when being viewed on a cross section of the continuous fiber layer on the basis of a circular cross section of the continuous fiber.

9. The continuous fiber-reinforced resin composite material of claim 1, wherein the continuous fiber is one selected from the group consisting of carbon fibers, glass fibers, aramid fibers, and combinations thereof.

10. The continuous fiber-reinforced resin composite material of claim 1, wherein the resin includes one selected from the group consisting of polytetrafluoroethylene (PTFE), polyethylene, polypropylene (PP), polystyrene, polyphenylene oxide (PPO), polyvinyl chloride (PVC), polyethylene terephthalate (PET), Nylon 6.6, polymethyl methacrylate (PMMA), and combinations thereof.

11. The continuous fiber-reinforced resin composite material of claim 1, wherein the resin penetrating into the continuous fiber layer originates from the resin layer, so that the resin layers are integrated with the continuous resin layers.

12. A molded article comprising the continuous fiber-reinforced resin composite material of any one of claims 1 to 11.

13. The molded article of claim 12, wherein the continuous fiber-reinforced resin composite material is wound.

14. The molded article of claim 12, wherein the continuous fiber-reinforced resin composite material is woven as a weft or a warp.

## Patentansprüche

1. Endlosfaserverstärktes Harzverbundmaterial, das ein Laminat ist, in dem eine Endlosfaserschicht und eine Harzschicht abwechselnd laminiert sind, wobei die Harzschicht eine Schicht ist, die durch Einschließen eines thermoplastischen Harzes oder eines duroplastischen Harzes ausgebildet wird, und die Endlosfaserschicht einen Strukturrahmen von Endlosfasern einschließt, der durch Anordnen von Endlosfasern nebeneinander ausgebildet wird, wobei das thermoplastische Harz oder das duroplastische Harz, das aus der Harzschicht stammt, in den Strukturrahmen von Endlosfasern von einer Oberfläche der Endlosfaser bis zu einer vorbestimmten Tiefe eindringt, um eine harzgetränkte Endlosfaser derart auszubilden, dass ein Teil des Strukturrahmens von Endlosfasern die harzgetränkte Endlosfaser ist und der Rest des Strukturrahmens von Endlosfasern eine nicht harzgetränkte Endlosfaser ist, in die das thermoplastische Harz oder das duroplastische Harz nicht eingedrungen ist, wobei ein Schüttvolumenverhältnis der harzgetränkten Endlosfaser zu der nicht harzgetränkten Endlosfaser 4:6 bis 7:3 beträgt.

2. Endlosfaserverstärktes Harzverbundmaterial nach Anspruch 1, wobei das endlosfaserverstärkte Harzverbundmaterial wenigstens zwei der mehreren der Endlosfaserschichten oder der Harzschichten einschließt.

3. Endlosfaserverstärktes Harzverbundmaterial nach Anspruch 1, wobei die Endlosfaserschicht eine Dicke von 20 µm bis 65 µm aufweist.

4. Endlosfaserverstärktes Harzverbundmaterial nach Anspruch 1, wobei die Endlosfaser einen durchschnittlichen Durchmesser von 5 µm bis 20 µm aufweist.

5. Endlosfaserverstärktes Harzverbundmaterial nach Anspruch 1, wobei der Strukturrahmen von Endlosfasern aus zwei (2) bis zwanzig (20) Lagen ausgebildet ist, von denen eine Lage aus einzelnen Endlosfasern ausgebildet ist, die nebeneinander angeordnet sind.

6. Endlosfaserverstärktes Harzverbundmaterial nach Anspruch 1, wobei die Harzschicht eine Dicke von 10 µm bis 200 µm aufweist.

7. Endlosfaserverstärktes Harzverbundmaterial nach Anspruch 1, wobei das aus der Harzschicht stammende Harz von einer Oberfläche der Endlosfaserschicht in den Strukturrahmen von Endlosfasern zu der Mitte hin derart eindringt, dass die harzgetränkte Endlosfaser in einer Tiefe von bis zu 5 % bis 35 % auf der Basis der Gesamtdicke der Endlosharzschicht vorhanden ist.

8. Endlosfaserverstärktes Harzverbundmaterial nach Anspruch 1, wobei der Strukturrahmen von Endlosfasern durch Stapeln der Endlosfasern ausgebildet wird, und eine Packungsform, in der die Endlosfasern gestapelt sind, eine Dreieckspackung oder eine quadratische Packung ist, wenn sie auf einem Querschnitt der Endlosfaserschicht auf der Basis eines kreisförmigen Querschnitts der Endlosfaser betrachtet wird.

9. Endlosfaserverstärktes Harzverbundmaterial nach Anspruch 1, wobei die Endlosfaser aus der Gruppe ausgewählt ist, die aus Kohlenstofffasern, Glasfasern, Aramidfasern und Kombinationen davon besteht.

10. Endlosfaserverstärktes Harzverbundmaterial nach Anspruch 1, wobei das Harz eines einschließt, das aus der Gruppe, die aus Polytetrafluorethylen (PTFE), Polyethylen, Polypropylen (PP), Polystyrol, Polyphenylenoxid (PPO), Polyvinylchlorid (PVC), Polyethylenterephthalat (PET), Nylon 6,6, Polymethylmethacrylat (PMMA) und Kombinationen davon besteht, ausgewählt ist.

11. Endlosfaserverstärktes Harzverbundmaterial nach Anspruch 1, wobei das in die Endlosfaserschicht eindringende Harz derart aus der Harzschicht stammt, dass die Harzschichten mit den Endlosharzschichten integriert sind.

12. Formling, umfassend das endlosfaserverstärkte Harzverbundmaterial nach einem der Ansprüche 1 bis 11.

13. Formling nach Anspruch 12, wobei das endlosfaserverstärkte Harzverbundmaterial gewickelt ist.

14. Formling nach Anspruch 12, wobei das endlosfaserverstärkte Harzverbundmaterial als ein Schussfaden oder ein Kettfaden gewebt ist.

## Revendications

1. Matériau composite en résine renforcée par des fibres continues qui est un stratifié dans lequel une couche de fibre continue et une couche de résine sont stratifiées alternativement, dans lequel la couche de résine est une couche formée par l'inclusion d'une résine thermoplastique ou d'une résine thermodurcissable, et la couche de fibre continue comprend un cadre structurel de fibres continues formé en disposant des fibres continues côte à côte, dans lequel la résine thermoplastique ou la résine thermodurcissable provenant de la couche de résine pénètre dans le cadre structurel de fibres continues jusqu'à une profondeur prédéterminée depuis une surface de la fibre continue pour former une fibre continue imprégnée de résine, de telle sorte qu'une partie du cadre structurel de fibres continues est la fibre continue imprégnée de résine et le reste du cadre structurel de fibres continues est une fibre continue non imprégnée de résine dans laquelle la résine thermoplastique ou la résine thermodurcissable n'est pas pénétrée, un rapport volumique apparent de la fibre continue imprégnée de résine à la fibre continue non imprégnée de résine étant de 4:6 à 7:3.

2. Matériau composite en résine renforcée par des fibres continues selon la revendication 1, dans lequel le matériau composite en résine renforcée par des fibres continues comprend au moins deux couches parmi la pluralité de couches de fibres continues ou de couches de résine.

3. Matériau composite en résine renforcée par des fibres continues selon la revendication 1, dans lequel la couche de fibre continue a une épaisseur de 20 µm à 65 µm.

4. Matériau composite en résine renforcée par des fibres continues selon la revendication 1, dans lequel la fibre continue a un diamètre moyen de 5 µm à 20 µm.

5. Matériau composite en résine renforcée par des fibres continues selon la revendication 1, dans lequel le cadre structurel de fibres continues est formé en deux (2) à vingt (20) plis, dont un pli est formé de fibres continues individuelles disposées côte à côte.

6. Matériau composite en résine renforcée par des fibres continues selon la revendication 1, dans lequel la couche de résine a une épaisseur de 10 µm à 200 µm.

7. Matériau composite en résine renforcée par des fibres continues selon la revendication 1, dans lequel la résine provenant de la couche de résine pénètre dans le cadre structurel de fibres continues vers le centre depuis une surface de la couche de fibre continue, de sorte que la fibre continue imprégnée de résine est présente jusqu'à une profondeur de 5 % à 35 % sur la base de l'épaisseur totale de la couche de résine continue.

8. Matériau composite en résine renforcée par des fibres continues selon la revendication 1, dans lequel le cadre structurel de fibres continues est formé par empilement des fibres continues, et par une forme d'emballage dans lequel les fibres continues sont empilées en un emballage triangulaire ou un emballage carré lorsqu'il est observé sur une section transversale de la couche de fibre continue sur la base d'une section transversale circulaire de la fibre continue.

9. Matériau composite en résine renforcée par des fibres continues selon la revendication 1, dans lequel la fibre continue est une fibre choisie dans le groupe constitué par les fibres de carbone, les fibres de verre, les fibres d'aramide et leurs combinaisons.

10. Matériau composite en résine renforcée par des fibres continues selon la revendication 1, dans lequel la résine comprend une résine choisie dans le groupe constitué par le polytétrafluoroéthylène (PTFE), le polyéthylène, le polypropylène (PP), le polystyrène, l'oxyde de polyphénylène (PPO), le chlorure de polyvinyle (PVC), le polyéthylène téréphtalate (PET), le nylon 6,6, le polyméthacrylate de méthyle (PMMA), et de leurs combinaisons.

11. Matériau composite en résine renforcée par des fibres continues selon la revendication 1, dans lequel la résine pénétrant dans la couche de fibre continue provient de la couche de résine, de telle sorte que les couches de résine sont intégrées aux couches de résine continues.

12. Article moulé comprenant le matériau composite en résine renforcée par des fibres continues selon l'une quelconque des revendications 1 à 11.

13. Article moulé selon la revendication 12, dans lequel le matériau composite en résine renforcée par des fibres continues est enroulé.

14. Article moulé selon la revendication 12, dans lequel le matériau composite en résine renforcée par des fibres continues est tissé en trame ou en chaîne.
